(19) Europäisches Patentamt / European Patent Office / Office européen des brevets

(11) **EP 3 929 550 B1**

(12) **FASCICULE DE BREVET EUROPEEN**

(45) Date de publication et mention
de la délivrance du brevet:
**10.01.2024 Bulletin 2024/02**

(51) Classification Internationale des Brevets (IPC):
**G01J 5/20** (2006.01)     **G01J 5/80** (2022.01)
**G01J 5/00** (2022.01)

(21) Numéro de dépôt: **21172989.2**

(22) Date de dépôt: **10.05.2021**

(52) Classification Coopérative des Brevets (CPC):
**G01J 5/20; G01J 5/80**

(54) **PROCEDE DE TRAITEMENT D'UNE IMAGE BRUTE COLLECTEE PAR UN DETECTEUR A BOLOMETRES ET DISPOSITIF ASSOCIE**

VERFAHREN ZUR VERARBEITUNG EINES ROHBILDES, DAS VON EINEM BOLOMETER-DETEKTOR GESAMMELT WURDE, UND ENTSPRECHENDE VORRICHTUNG

METHOD FOR PROCESSING A RAW IMAGE COLLECTED BY A DETECTOR WITH BOLOMETERS AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2020 FR 2006538**

(43) Date de publication de la demande:
**29.12.2021 Bulletin 2021/52**

(73) Titulaire: **Schneider Electric Industries SAS
92500 Rueil-Malmaison (FR)**

(72) Inventeur: **CHIESI, Laurent
38500 VOIRON (FR)**

(74) Mandataire: **Schneider Electric
Service Propriété Industrielle
35, rue Joseph Monier
CS 30323
92506 Rueil-Malmaison Cedex (FR)**

(56) Documents cités:
**EP-A1- 3 594 643**

**Description**

## DOMAINE TECHNIQUE

La présente invention concerne un procédé de traitement d'une image brute collectée par un détecteur pourvu d'une matrice de bolomètres. En particulier, le procédé de traitement selon la présente invention est destiné à corriger les non-uniformités dues aux dispersions des caractéristiques des bolomètres du détecteur.

La présente invention concerne également un programme d'ordinateur susceptible de mettre en oeuvre toutes les étapes du procédé selon la présente invention.

L'invention concerne enfin un détecteur comprenant des bolomètres et un calculateur mettant en oeuvre le programme d'ordinateur.

## ÉTAT DE LA TECHNIQUE ANTÉRIEURE

Un détecteur infrarouge (ou imageur) connu de l'état de la technique comprend en général des bolomètres organisés de manière matricielle selon n lignes et m colonnes. Lorsqu'ils sont exposés à une scène en vue d'une acquisition d'une image, ces bolomètres, sensibles à la température de la scène, voient leur résistance électrique varier. En d'autres termes, le courant circulant dans chacun des bolomètres est dépendant de la température de la scène, mais également de la température ambiante. En particulier, la mesure $S_p(i,j)$ des bolomètres Bol(i,j) d'une matrice de bolomètres évolue selon la loi suivante :

[Math 1]

$$S_P(i,j) = R_{esp}(T_{scène} - T_{amb}) + S_{0,T_{amb}}$$

Où :

- $T_{amb}$ est la température ambiante, également associée à la température de l'imageur ;
- $T_{scène}$ est la température de la scène vue par le bolomètre i, j ;
- $R_{esp}$ est la responsivité du bolomètre ;
- $S_{0,Tamb}$ est la valeur de sortie du bolomètre pour une température de scène égale à la température de l'imageur.

Le terme $R_{esp}$ traduit la capacité d'un bolomètre à convertir un signal entrant (en particulier un rayonnement) en un signal électrique et plus particulièrement un courant électrique. Ce terme $R_{esp}$, qui dépend des matériaux utilisés pour la conception du bolomètre ainsi que de son architecture, est intimement liée à sa résistivité électrique. Cette dernière varie en fonction de la température ambiante ainsi que de la différence entre cette température ambiante et la température de scène. La déduction de la température de scène impose de connaître la température de l'imageur $T_{amb}$, de sorte que le détecteur est en général également pourvu d'un capteur de température.

En pratique, un tel détecteur est également pourvu de bolomètres additionnels, dits bolomètres aveugles, et non exposés à la scène. Leur résistivité électrique, et par voie de conséquence le courant les traversant, ne dépendent que de la température ambiante $T_{amb}$.

Ainsi, une mesure différentielle des courants traversant un bolomètre aveugle et un bolomètre de la matrice de bolomètres permet de déduire la variation de résistivité électrique de ce dernier.

En général, chaque colonne de la matrice de bolomètres est associée à un bolomètre aveugle qui est mis en oeuvre pour chacun des bolomètres de ladite colonne lors de la mesure différentielle. Toutefois, d'autres configurations peuvent être envisagées, et notamment la mise en commun d'un unique bolomètre aveugle pour plusieurs colonnes de bolomètres.

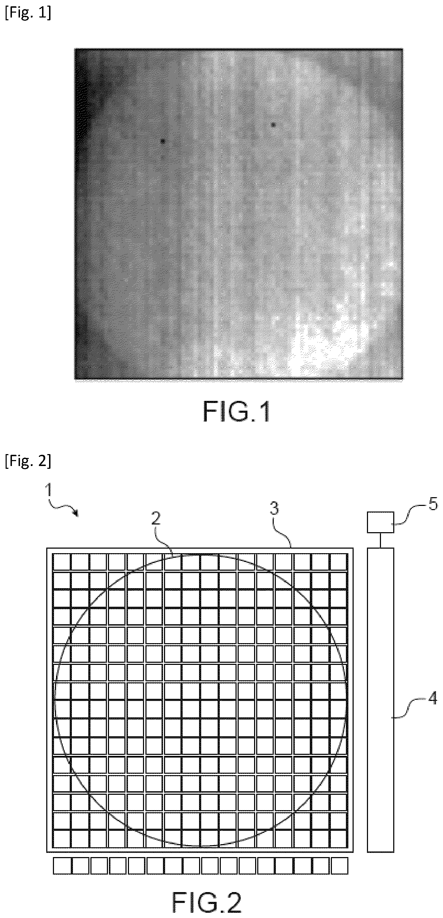

L'image brute (figure 1) d'une scène susceptible d'être obtenue avec un tel dispositif n'est en général pas exploitable, et nécessite un traitement additionnel.

En particulier, l'image illustrée à la figure 1 révèle le positionnement des bolomètres du détecteur, et plus particulièrement une non-uniformité (« effet de pixellisation »). Cet effet trouve son origine dans la dispersion importante des résistances électriques d'un bolomètre à l'autre.

L'image présente également un aspect colonnaire qui est dû à la dispersion des résistances électriques entre les bolomètres aveugles.

Afin de pallier ces problèmes, différentes solutions ont pu être envisagées.

Il a pu, notamment, être proposé de mettre en oeuvre un obturateur mécanique sur le détecteur. En particulier, l'obturateur mécanique est placé devant le détecteur de manière à collecter une image de référence relative à la température ambiante, qui est par la suite soustraite à l'image de la scène.

Cet agencement, relativement simple sur son principe, n'est toutefois pas satisfaisant.

En effet, la mise en oeuvre d'un obturateur, et la motorisation qui lui est associée, posent à la fois des problèmes de coûts et d'encombrement.

Par ailleurs, l'image de référence doit être rafraîchie dès lors que la température ambiante varie.

De manière alternative, il a été proposé de caractériser la réponse en température de référence, notamment la température du détecteur, et notamment de chacun de ses bolomètres.

Cette caractérisation comporte des mesures de référence à différentes températures avec l'ensemble des bolomètres du détecteur obturés avec un obturateur.

Les mesures de références permettent alors de déterminer l'évolution en température de chacun des bolomètres et ainsi construire des tables de calibration conservées dans un espace mémoire du détecteur.

Ainsi, en fonctionnement, le détecteur corrige l'image brute par soustraction, pour chaque bolomètre, des valeurs obtenues par interpolation à partir des tables de calibration.

Cette solution, qui permet de réduire l'effet de non uniformité de l'image d'un bolomètre à l'autre, n'est toutefois pas satisfaisante.

En effet, la procédure d'acquisition des mesures de référence est longue, et génère un surcoût de fabrication du détecteur.

Par ailleurs, l'espace mémoire dédié à la sauvegarde des tables de calibration, du fait du coût qui lui est associé, n'est pas souhaitable.

Un troisième procédé basé sur des algorithmes permettant de corriger la non-uniformité de l'image a été proposée dans les documents [1] et [2] cités à la fin de la description. Ces procédés connus de l'état de la technique ne sont pas non plus satisfaisants.

En effet, ces procédés sont généralement fastidieux à mettre en oeuvre, et leur robustesse est discutable.

Par ailleurs, ces procédés nécessitent la mise en oeuvre de moyens de calculs lourds qui pénalisent d'autant le coût des détecteurs dans lesquels ils sont mis en oeuvre.

Enfin, un quatrième procédé de correction des mesures brutes collectées par les bolomètres via une détermination de matrice de référence a été proposé dans le document [3] cité à la fin de la description. Ce procédé est relativement robuste pour corriger l'effet de pixellisation et l'aspect colonnaire susceptibles d'être observés sur une image brute.

Néanmoins, ces deux aspects sont corrigés au moyen des deux procédures distinctes de sorte que ce quatrième procédé mérite d'être simplifié.

Un but de la présente invention est de proposer un procédé de traitement d'image collectée par un détecteur pourvu de bolomètres plus simple à mettre en oeuvre, et ne nécessitant pas l'adjonction de pièces mécaniques ainsi que la robotisation qui leur est associée.

Un autre but de l'invention est de proposer un procédé permettant de corriger l'effet colonnaire observé sur une image brute.

**EXPOSÉ DE L'INVENTION**

Les but de l'invention sont, au moins en partie, atteints par un procédé de traitement d'une image brute tel que défini dans la revendication 1.

Selon un mode de mise en oeuvre, les mesures de référence $Pix_{REF}(i,j)$ sont sauvegardées dans un espace mémoire du détecteur.

Selon un mode de mise en oeuvre, le détecteur est pourvu d'une lentille montée sur un diaphragme qui obture les premiers bolomètres $Bol_1(i,j)$ au niveau des coins du détecteur. Selon un mode de mise en oeuvre, les mesures de références $Pix_{REF}(i,j)$ sont obtenues, lors d'une étape d'étalonnage du détecteur, en masquant avec un obturateur, l'ensemble des bolomètres, l'obturateur étant maintenu à une température identique à celle du détecteur.

Selon un mode de mise en oeuvre, les mesures de référence $Pix_{REF}(i,j)$ sont des mesures moyennes du signal effectivement collecté par les bolomètres lors de l'étape d'étalonnage.

Selon un mode de mise en oeuvre, le détecteur comprend également des bolomètres aveugles $Bol_{blind}(i,j)$, chaque bolomètre aveugle $Bol_{blind}(i,j)$ étant mis en oeuvre pour la mesure différentielle des bolomètres d'au moins une colonne de bolomètres $Bol(i,j)$ qui lui est propre, avantageusement chaque bolomètre aveugle $Bol_{blind}(i,j)$ est associé à une seule colonne $(C_j)$ de bolomètres $Bol(i,j)$.

L'invention concerne également un programme d'ordinateur, qui lorsqu'il est exécuté par un ordinateur, conduisent à mettre en oeuvre le procédé selon l'invention.

L'invention concerne également un dispositif comprenant :

- un détecteur pourvu de bolomètres $Bol(i,j)$ agencés de manière matricielle selon n lignes $(L_i)$ et m colonnes $(C_j)$,

les bolomètres comprenant des premiers $Bol_1(i,j)$ et des deuxièmes $Bol_2(i,j)$ bolomètres, les premiers bolomètres $Bol_1(i,j)$ étant obturés ;

- un calculateur doté du programme d'ordinateur selon l'invention.

## BRÈVE DESCRIPTION DES DESSINS

D'autres caractéristiques et avantages apparaîtront dans la description qui va suivre d'un procédé de traitement d'une image, donnés à titre d'exemples non limitatifs, en référence aux dessins annexés dans lesquels :

[Fig. 1] est une image brute d'une scène obtenue par un détecteur pourvu de bolomètres agencés selon une matrice de 80 lignes par 80 colonnes ;
[Fig. 2] est une représentation schématique d'un détecteur pourvu d'une lentille montée sur un diaphragme susceptible d'être mis en oeuvre selon la présente invention ;
[Fig. 3] est une représentation graphique des premières mesures brutes $Pix_1(i,j)$ (sur l'axe vertical) en fonction et des premières mesures de référence $Pix_{1REF}(i,j)$ (axe horizontal) ;
[Fig. 4a] est une image brute formée par les mesures brutes $Pix(i,j)$ collectées par le détecteur selon la présente invention ;
[Fig. 4b] est une image corrigée formée par les mesures corrigées $Pix_{Cor}(i,j)$ selon les termes de la présente invention.

## EXPOSÉ DÉTAILLÉ DE MODES DE RÉALISATION PARTICULIERS

La présente invention va maintenant être décrite en relation avec les figures 1 à 4b.

La figure 2 représente un détecteur 1 pourvu d'une pluralité de bolomètres, notés $Bol(i,j)$, agencés de manière matricielle selon n lignes (notées « $L_i$ ») et m colonnes (notées « $C_j$ »). Un bolomètre indicé i, j correspond à un bolomètre disposé à l'intersection de la ligne i avec la colonne j.

Parmi les bolomètres $Bol(i,j)$, on peut distinguer des premiers bolomètres $Bol_1(i,j)$ et des deuxièmes bolomètres $Bol_2(i,j)$.

En particulier, les bolomètres $Bol(i,j)$ sont agencés de sorte que les premiers bolomètres $Bol_1(i,j)$ sont obturés tandis que les deuxièmes bolomètres $Bol_2(i,j)$ sont exposés à une scène destinée à être imagée.

En d'autres termes, seuls les deuxièmes bolomètres $Bol_2(i,j)$ sont sensibles au rayonnement (thermique) de la scène destinée à être imagée tandis que les premiers bolomètres $Bol_1(i,j)$ ne reçoivent ou ne perçoivent aucun rayonnement de ladite scène. Aussi, la définition d'un premier bolomètre $Bol_1(i,j)$, selon les termes de la présente invention, peut impliquer une sélection desdits premiers bolomètres $Bol_1(i,j)$ parmi l'ensemble des bolomètres $Bol(i,j)$ du détecteur 1. Cette sélection peut, à cet égard, reposer sur des considérations relatives à l'efficacité d'obturation desdits premiers bolomètres $Bol_1(i,j)$.

Il est également entendu que l'obturation des premiers bolomètres $Bol_1(i,j)$ est permanente, et que cette dernière peut être obtenue via un élément spécifique et fixe (par exemple un diaphragme tel que décrit dans la suite de la description) faisant partie intégrante du détecteur. Par « élément fixe », il est entendu non mobile et dépourvu de motorisation.

Les premiers bolomètres $Bol_1(i,j)$ peuvent, par exemple, être obturés par un diaphragme sur lequel est montée une lentille 2 disposée entre la scène et le détecteur 1. Les premiers bolomètres $Bol_1(i,j)$ sont, selon cette configuration, disposés dans les coins du détecteur. L'invention n'est toutefois pas limitée à cet agencement, et les premiers bolomètres $Bol_1(i,j)$ peuvent par exemple former des colonnes de bolomètres complètes, en particulier les colonnes bordant la matrice de bolomètres.

Il est par ailleurs entendu qu'un premier bolomètre $Bol_1(i,j)$, dans la mesure où ce dernier se retrouve masqué, n'est sensible qu'au rayonnement associé au diaphragme qui l'obture lors de l'acquisition de données, et qui est avantageusement à la même température que le détecteur 1.

Le détecteur de la figure 2 peut également comprendre une pluralité de bolomètres aveugles $Bol_{BLIND}(j)$.

Le détecteur 1 comprend en outre un calculateur 4 doté d'un processeur de calcul destiné à exécuter les différentes étapes du procédé selon la présente invention. Le calculateur peut également comprendre un espace mémoire pour sauvegarder des mesures brutes, de référence, ou intermédiaires.

Enfin, le détecteur 1 peut comprendre une sonde de température 5 destinée à évaluer une température de référence, notamment la température du détecteur, noté $T_{amb}$. La sonde de température peut, par exemple, comprendre une jonction PN.

Le procédé selon la présente invention propose de corriger les défauts d'une image brute collectée par le détecteur 1. L'image brute est notamment caractérisée par un ensemble de mesures brutes $Pix(i,j)$ représentatives de la température $T_{scène}$ de la scène observée par chaque bolomètre i, j. Ces mesures brutes $Pix(i,j)$ sont dérivées d'un signal $S_p(i, j)$ effectivement délivré par chaque bolomètre et représentatif de la scène observée via l'équation :

[Math 4]

$$S_P(i,j) = R_{esp(i,j)}(T_{scène} - T_{amb}) + S_{0,T_{amb}}$$

Où :

- $T_{amb}$ est la température de l'imageur ;
- $T_{scène}$ est la température de la scène vue par le bolomètre i, j ;
- $R_{esp}(i,j)$ est la responsivité du bolomètre ;
- $S_{0,T_{amb}}$ est la valeur de sortie du bolomètre pour une température de scène égale à la température ambiante.

Il est entendu que la température $T_{amb}$ est la température de chacun des bolomètres de l'imageur, et que cette dernière est confondue avec la température ambiante en cas d'équilibre thermique avec l'environnement dans lequel se trouve l'imageur.

La responsivité $R_{esp}(i,j)$ de chacun des bolomètres Bol(i,j) peut être déterminée lors de la fabrication du détecteur ou avant sa première utilisation. En particulier, la détermination de la responsivité Bol(i,j) peut impliquer une première et une deuxième mesure d'étalonnage. La première mesure d'étalonnage peut notamment comprendre une exposition du détecteur, et plus particulièrement de l'ensemble des bolomètres, à un objet ou corps noir maintenu à une première température avantageusement égale à celle desdits bolomètres et noté ci-avant $T_{amb}$. La deuxième mesure d'étalonnage peut comprendre une deuxième exposition du détecteur à un autre corps noir maintenu à une deuxième température différente, par exemple plus élevée, de la première température. La simple connaissance de la température de référence, notamment la température du détecteur, ainsi que des première et deuxième températures permet de déduire la responsivité $R_{esp}(i,j)$ de chacun des bolomètres Bol(i,j). Les responsivités $R_{esp}(i,j)$ sont notamment sauvegardées dans l'espace mémoire du calculateur 4.

Cette procédure d'étalonnage reste simple à exécuter, et ne nécessite pas la mise en oeuvre d'algorithmes consommateurs d'espace mémoire et de ressources de calculs importantes.

La figure 1 représente un exemple d'image formée à partir de mesures brutes Pix(i,j). Cette figure 1, discutée dans la section « ETAT DE LA TECHNIQUE ANTERIEURE », présente des défauts d'uniformité et un aspect colonnaire.

La non-uniformité est essentiellement due à une dispersion des résistances électriques des bolomètres formant le détecteur.

Des zones plus sombres peuvent par ailleurs être observées au niveau des coins de l'image. Ces dernières correspondent aux mesures brutes Pix(i,j), dites premières mesures brutes $Pix_1(i,j)$, collectées par les premiers bolomètres $Bol_1(i,j)$. Ces zones sombres sont le fait de l'obturation des premiers bolomètres $Bol_1(i,j)$ par le diaphragme sur lequel est montée la lentille, et seront mises à profit pour la correction des défauts effectivement observées sur l'image brute.

Une zone centrale plus claire, correspondant aux mesures brutes Pix(i,j), dites deuxièmes mesures brutes $Pix_2(i,j)$, des deuxièmes bolomètres $Bol_2(i,j)$, peut également être observée.

Enfin, la figure 1 révèle également un aspect colonnaire qui est dû à la dispersion des résistances électriques des bolomètres aveugles $Bol_{BLIND}(j)$. Chaque bolomètre aveugle $Bol_{BLIND}(j)$ est, à cet égard, mis en oeuvre pour la mesure différentielle des bolomètres d'au moins une colonne de bolomètres qui lui est propre, avantageusement chaque bolomètre aveugle $Bol_{BLIND}(j)$ est associé à une seule colonne $C_j$ de bolomètres Bol(i,j).

Notons que si toutes les colonnes étaient associées au même bolomètre aveugle, l'effet colonnaire ne serait pas observé. Toutefois cette configuration n'est pas souhaitable dans la mesure où une défaillance de cet unique bolomètre aveugle rendrait le détecteur non fonctionnel dans son entièreté.

Le procédé selon la présente invention comprend une étape a) de corrélation entre les premières mesures brutes $Pix_1(i,j)$ et des premières mesures de référence $Pix_{1REF}(i,j)$.

Les premières mesures de référence $Pix_{1REF}(i,j)$ sont notamment des mesures collectées par chacun des premiers bolomètres $Bol_1(i,j)$ par application d'un masque ou d'un obturateur, recouvrant intégralement le détecteur 1 (et donc l'intégralité des premiers et des deuxièmes bolomètres), et maintenu à une température de référence, par exemple la même température que ledit détecteur 1, telle que 20°C.

Le masque ou l'obturateur n'est pas à confondre avec le diaphragme précédemment cité. En effet, le masque est une pièce posée en regard du détecteur (des bolomètres) à des fins de calibration ou pour la détermination de caractéristiques techniques des bolomètres au moment de sa fabrication. Ce masque n'est en aucune manière considéré lors de l'utilisation du détecteur.

Il est entendu que lors de l'acquisition des premières mesures de référence $Pix_{1REF}(i,j)$, il est également procédé à l'acquisition de deuxièmes mesures de référence $Pix_{2REF}(i,j)$ par les deuxièmes bolomètres $Pix_{2REF}(i,j)$. Ces deuxièmes mesures de référence $Pix_{2REF}(i,j)$, à l'instar des premières mesures de référence $Pix_{1REF}(i,j)$, correspondent à l'image d'une scène maintenue une température de référence, par exemple à la même température que le détecteur. Ces deuxièmes mesures de référence $Pix_{2REF}(i,j)$ sont notamment utilisées lors de l'étape b) selon l'invention détaillée ci-après.

Les premières mesures de référence $Pix_{1REF}(i,j)$ et les deuxièmes mesures de référence $Pix_{2REF}(i,j)$ peuvent être sauvegardées dans l'espace mémoire du calculateur 4. L'acquisition de ces mesures de référence peut être faite dans le cadre d'une procédure d'étalonnage et avantageusement être confondue avec la première mesure d'étalonnage précédemment décrite.

L'étape a) de corrélation selon la présente invention peut impliquer une régression linéaire. En particulier, l'étape a) de corrélation peut impliquer la détermination, par régression linéaire, des coefficients $\alpha$ et $Pix_{offset}$, en particulier à partir premières mesures de référence $Pix_{1REF}(i,j)$, de sorte que :

[Math 5]

$$Pix_1(i,j) = \alpha \cdot Pix_{1REF}(i,j) + Pix_{offset}$$

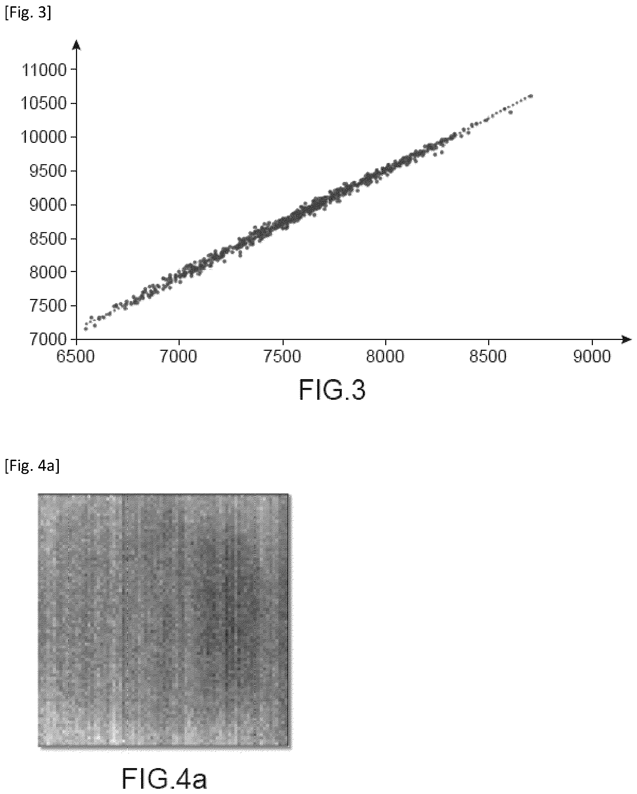

La figure 3 représente graphiquement les premières mesures brutes $Pix_1(i,j)$ (axe vertical) en fonction des premières mesures de référence $Pix_{1REF}(i,j)$ (axe horizontal). Une tendance linéaire est clairement observée, permettant ainsi de justifier du choix d'une corrélation au moyen d'une régression linéaire.

Cet aspect est inattendu dans la mesure où aucun élément technique ne laisse présager un tel comportement. Au contraire, une tendance plus erratique était attendue compte tenu de la pluralité de paramètres techniques déterminant le fonctionnement d'un bolomètre.

La corrélation par régression linéaire est notamment obtenue sans correction ou calibration préalable de l'aspect colonnaire des premières mesures de référence $Pix_1(i,j)$, ce qui permet toutefois d'obtenir un procédé de traitement satisfaisant et nécessitant ainsi de moins de ressources de calcul.

Le procédé selon la présente invention comprend aussi une étape b) de correction de mesures brutes $Pix(i,j)$.

L'étape b) de correction de l'image brute comprend notamment le calcul de mesures corrigées $Pix_{Cor}(i,j)$ d'une image corrigée pour chaque bolomètre $Bol(i,j)$ sur la base des mesures de référence $Pix_{REF}(i,j)$ et du résultat de l'étape a) de corrélation.

En particulier, l'étape b) implique le calcul des mesures corrigées $Pix_{Cor}(i,j)$. Cette correction des mesures brutes peut impliquer l'ensemble des mesures brutes $Pix(i,j)$ ou seulement les deuxièmes mesures brutes $Pix_2(i,j)$ représentatives de la scène. Notons que cette deuxième alternative reste plus avantageuse en termes de ressources de calculs.

Le calcul des mesures corrigées $Pix_{Cor}(i,j)$ est exécuté au moyen de la relation suivante :

[Math 6]

$$Pix_{Cor}(i,j) = Pix(i,j) - \alpha \cdot Pix_{REF}(i,j) - Pix_{offset}$$

Le calcul des mesures corrigées $Pix_{Cor}(i,j)$ dépend donc des mesures de référence $Pix_{REF}(i,j)$, sans nécessiter de correction ou calibration préalable de celles-ci.

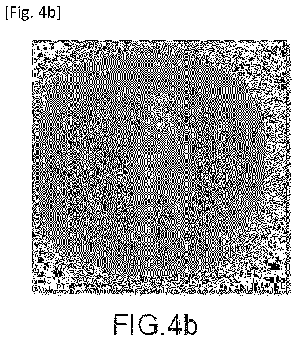

Les figures 4a et 4b illustrent, à cet égard, l'effet de la correction selon la présente invention sur une image collectée à partir d'une scène par le détecteur 1.

En particulier, la figure 4a est une image brute d'une scène représentant un individu collectée par le détecteur 1. Les effets de pixellisation et colonnaire, ne permettent toutefois pas de distinguer l'individu sur cette image.

La figure 4b, pour sa part, représente une image corrigée selon les termes de la présente invention. Cette image, qui ne présente plus de pixellisation et d'aspect colonnaire, permet de distinguer très nettement l'individu.

Le procédé selon la présente invention permet ainsi de corriger les défauts inhérents aux images formées au moyen de détecteurs bolométriques. Notamment, le procédé selon la présente invention permet de corriger les effets de pixellisation et colonnaires régulièrement observés sur les images formées au moyen de détecteurs bolométriques. Le procédé selon la présente invention relativement peu consommateur en termes de ressources de calculs reste très robuste et efficace.

Par ailleurs, ce procédé ne met pas en oeuvre de pièce mécanique additionnelle pourvu d'une motorisation de sorte que son coût de fabrication et d'utilisation s'en trouve réduit. L'invention concerne également un programme d'ordinateur, qui lorsqu'il est exécuté par un ordinateur, conduit à mettre en oeuvre le procédé selon de correction selon la présente invention.

L'invention concerne également un dispositif comprenant :

- un détecteur pourvu de bolomètres Bol(i,j) agencés de manière matricielle selon n lignes (Li) et m colonnes ($C_j$), les bolomètres comprenant des premiers $Bol_1(i,j)$ et des deuxièmes $Bol_2(i,j)$ bolomètres, les premiers bolomètres $Bol_1(i,j)$ étant obturés ;
- un calculateur doté du programme d'ordinateur selon la présente invention.

**RÉFÉRENCES**

[1] EP2940991B1.
[2] US2010237245A1.
[3] EP 3594643A1.

**Revendications**

1. Procédé de traitement d'une image brute **caractérisée par** des mesures brutes Pix(i,j), qui comprennent des premières $Pix_1(i,j)$ et des deuxièmes $Pix_2(i,j)$ mesures brutes collectées, respectivement, par des premiers $Bol_1(i,j)$ et des deuxièmes $Bol_2(i,j)$ bolomètres d'un ensemble de bolomètres Bol(i,j) d'un détecteur agencés de manière matricielle selon n lignes (Li) et m colonnes ($C_j$), les premiers bolomètres $Bol_1(i,j)$ étant obturés lors de l'acquisition des mesures brutes Pix(i,j), le procédé étant exécuté par un calculateur sur la base de mesures de référence $Pix_{REF}(i, j)$ qui comprennent des premières $Pix_{1REF}(i, j)$ et des deuxièmes $Pix_{2REF}(i, j)$ mesures de références associées, respectivement, aux premiers $Bol_1(i,j)$ et aux deuxièmes $Bol_2(i,j)$ bolomètres, les mesures de référence $Pix_{REF}(i,j)$ étant obtenues, lors d'une étape d'étalonnage du détecteur, en masquant avec un obturateur, l'ensemble des bolomètres, l'obturateur étant maintenu à une température de référence, le procédé comprenant :

   a) une étape de corrélation comprenant une régression linéaire pour chaque premier bolomètre $Bol_1(i,j)$, entre les premières mesures brutes $Pix_1(i,j)$ et les premières mesures de référence $Pix_{1REF}(i,j)$ vérifiant la relation suivante :

$$Pix_1(i,j) = \alpha \cdot Pix_{1REF}(i,j) + Pix_{offset}$$

   où $\alpha$ et $Pix_{offset}$ sont les termes déterminés lors de la régression linéaire ;
   b) une étape de correction de l'image brute qui comprend le calcul de mesures corrigées $Pix_{Cor}(i,j)$ d'une image corrigée pour au moins chaque deuxième bolomètre Bol(i,j) sur la base des mesures de référence $Pix_{REF}(i, j)$ et du résultat de l'étape a) de corrélation, l'étape b) de correction comprenant le calcul des mesures corrigées Pixcor(i,j) pour au moins chaque deuxième bolomètre Bol(i,j) selon la relation suivante :

$$Pix_{Cor}(i,j) = Pix(i,j) - \alpha \cdot Pix_{REF}(i,j) - Pix_{offset}$$

2. Procédé selon la revendication 1, dans lequel les mesures de référence $Pix_{REF}(i,j)$ sont sauvegardées dans un espace mémoire du détecteur.

3. Procédé selon l'une des revendications 1 à 2, dans lequel le détecteur est pourvu d'une lentille montée sur un diaphragme qui obture les premiers bolomètres $Bol_1(i,j)$ au niveau des coins du détecteur.

4. Procédé selon l'une des revendications 1 à 3, dans lequel la température de référence est une température égale à celle du détecteur.

5. Procédé selon la revendication 4, dans lequel les mesures de référence $Pix_{REF}(i,j)$ sont des mesures moyennes du signal effectivement collecté par les bolomètres lors de l'étape d'étalonnage.

6. Programme d'ordinateur, qui lorsqu'il est exécuté par un ordinateur connecté à un détecteur pourvu de bolomètres agencés de manière matricielle selon n lignes et m colonnes, conduit à mettre en oeuvre le procédé selon l'une des revendications 1 à 5.

**7.** Dispositif comprenant :

- un détecteur pourvu de bolomètres Bol(i,j) agencés de manière matricielle selon n lignes ($L_i$) et m colonnes ($C_j$), les bolomètres comprenant des premiers $Bol_1(i,j)$ et des deuxièmes $Bol_2(i,j)$ bolomètres, les premiers bolomètres $Bol_1(i,j)$ étant obturés ;
- un calculateur doté du programme d'ordinateur selon la revendication 6.

**Patentansprüche**

**1.** Verfahren zur Verarbeitung eines Rohbildes, das durch Rohmessungen Pix(i,j) gekennzeichnet ist, die erste $Pix_1(i,j)$ und zweite $Pix_2(i,j)$ Rohmessungen umfassen, die von ersten $Bol_1(i,j)$ beziehungsweise zweiten $Bol_2(i,j)$ Bolometern einer Anordnung von Bolometern Bol(i,j) eines Detektors erfasst werden, die matrixartig in n Zeilen (Li) und m Spalten ($C_j$) angeordnet sind, wobei die ersten Bolometer $Bol_1(i,j)$ bei der Erfassung der Rohmessungen Pix(i,j) verschlossen sind, wobei das Verfahren von einem Rechner auf der Basis von Referenzmessungen $Pix_{REF}(i, j)$ durchgeführt wird, die erste $Pix_{1REF}(i, j)$ und zweite $Pix_{2REF}(i, j)$ Referenzmessungen umfassen, die den ersten $Bol_1(i,j)$ beziehungsweise den zweiten $Bol_2(i,j)$ Bolometern zugeordnet sind, wobei die Referenzmessungen $Pix_{REF}(i,j)$ bei einem Schritt zur Kalibrierung des Detektors erhalten werden, indem die Anordnung von Bolometern mit einem Verschluss verdeckt wird, wobei der Verschluss auf einer Referenztemperatur gehalten wird, wobei das Verfahren umfasst:

a) einen Korrelationsschritt, der eine lineare Regression für jedes erste Bolometer $Bol_1(i,j)$ zwischen den ersten Rohmessungen $Pix_1(i,j)$ und den ersten Referenzmessungen $Pix_{1REF}(i,j)$ umfasst, welche die folgende Gleichung erfüllen:

$$Pix_1(i,j) = \alpha \cdot Pix_{1REF}(i,j) + Pix_{offset}$$

worin $\alpha$ und $Pix_{offset}$ Terme sind, die bei der linearen Regression bestimmt werden;

b) einen Schritt zur Korrektur des Rohbildes, der das Berechnen von korrigierten Messungen $Pix_{Cor}(i,j)$ eines korrigierten Bildes für mindestens jedes zweite Bolometer Bol(i,j) auf der Basis der Referenzmessungen $Pix_{REF}(i, j)$ und des Ergebnisses des Korrelationsschritts a) umfasst, wobei der Korrekturschritt b) das Berechnen der korrigierten Messungen $Pix_{Cor}(i,j)$ für mindestens jedes zweite Bolometer Bol(i,j) nach der folgenden Gleichung umfasst:

$$Pix_{Cor}(i,j) = Pix(i,j) - \alpha \cdot Pix_{REF}(i,j) - Pix_{offset}$$

**2.** Verfahren nach Anspruch 1, bei dem die Referenzmessungen $Pix_{REF}(i,j)$ in einem Speicherbereich des Detektors gespeichert werden.

**3.** Verfahren nach einem der Ansprüche 1 bis 2, bei dem der Detektor mit einer Linse versehen ist, die an einer Blende montiert ist, welche die ersten Bolometer $Bol_1(i,j)$ an den Ecken des Detektors verschließt.

**4.** Verfahren nach einem der Ansprüche 1 bis 3, bei dem die Referenztemperatur eine Temperatur gleich der des Detektors ist.

**5.** Verfahren nach Anspruch 4, bei dem die Referenzmessungen $Pix_{REF}(i,j)$ Durchschnittsmessungen des von den Bolometern bei dem Kalibrierungsschritt tatsächlich erfassten Signals sind.

**6.** Computerprogramm, das bei der Ausführung durch einen Rechner, der mit einem Detektor verbunden ist, der mit Bolometern versehen ist, die matrixartig in n Zeilen und m Spalten angeordnet sind, zur Umsetzung des Verfahrens nach einem der Ansprüche 1 bis 5 führt.

**7.** Vorrichtung, umfassend:

- einen Detektor, der mit Bolometern Bol(i,j) versehen ist, die matrixartig in n Zeilen (Li) und m Spalten ($C_j$) angeordnet sind, wobei die Bolometer erste $Bol_1(i,j)$ und zweite $Bol_2(i,j)$ Bolometer umfassen, wobei die ersten

Bolometer $Bol_1(i,j)$ verschlossen sind;
- einen Rechner, der mit dem Computerprogramm nach Anspruch 6 ausgestattet ist.

**Claims**

1. Method for processing a raw image **characterized by** raw measurements $Pix(i,j)$ that comprise first $Pix_1(i,j)$ and second $Pix_2(i,j)$ raw measurements collected, respectively, by first $Bol_1(i,j)$ and second $Bol_2(i,j)$ bolometers of a set of bolometers $Bol(i,j)$ of a detector that are arranged in the form of a matrix-array of n rows (Li) and m columns ($C_j$), the first bolometers $Bol_1(i,j)$ being closed off during the acquisition of the raw measurements $Pix(i,j)$, the method being executed by a computer on the basis of reference measurements $Pix_{REF}(i,j)$ that comprise first $Pix_{1REF}(i,j)$ and second $Pix_{2REF}(i,j)$ reference measurements associated, respectively, with the first $Bol_1(i,j)$ and with the second $Bol_2(i,j)$ bolometers, the reference measurements $Pix_{REF}(i,j)$ being obtained, during a step of calibrating the detector, by masking all of the bolometers with a shutter, the shutter being kept at a reference temperature, the method comprising:

   a) a correlation step comprising a linear regression for each first bolometer $Bol_1(i,j)$, between the first raw measurements $Pix_1(i,j)$ and the first reference measurements $Pix_{1REF}(i,j)$, satisfying the following relationship:

$$Pix_1(i,j) = \alpha \cdot Pix_{1REF}(i,j) + Pix_{offset}$$

   where $\alpha$ and $Pix_{offset}$ are the terms determined during the linear regression;
   b) a step of correcting the raw image, which comprises computing corrected measurements $Pix_{Cor}(i,j)$ of a corrected image for at least each second bolometer $Bol(i,j)$ on the basis of the reference measurements $Pix_{REF}(i,j)$ and of the result of correlation step a), wherein correction step b) comprises computing the corrected measurements $Pix_{Cor}(i,j)$ for at least each second bolometer $Bol(i,j)$ in accordance with the following relationship:

$$Pix_{Cor}(i,j) = Pix(i,j) - \alpha \cdot Pix_{REF}(i,j) - Pix_{offset}$$

2. Method according to Claim 1, wherein the reference measurements $Pix_{REF}(i,j)$ are saved in a memory space of the detector.

3. Method according to one of Claims 1 to 2, wherein the detector is provided with a lens mounted on a diaphragm that closes off the first bolometers $Bol_1(i,j)$ at the corners of the detector.

4. Method according to one of Claims 1 to 3, wherein the reference temperature is a temperature equal to that of the detector.

5. Method according to Claim 4, wherein the reference measurements $Pix_{REF}(i,j)$ are average measurements of the signal actually collected by the bolometers during the calibration step.

6. Computer program that, when it is executed by a computer connected to a detector provided with bolometers that are organized in the form of a matrix-array of n rows and m columns, leads to the method according to one of Claims 1 to 5 being implemented.

7. Device comprising:

   - a detector provided with bolometers $Bol(i,j)$ arranged in the form of a matrix-array of n rows (Li) and m columns ($C_j$), the bolometers comprising first $Bol_1(i,j)$ and second $Bol_2(i,j)$ bolometers, the first bolometers $Bol_1(i,j)$ being closed off;
   - a computer provided with the computer program according to Claim 6.

[Fig. 1]

FIG.1

[Fig. 2]

FIG.2

[Fig. 3]

FIG.3

[Fig. 4a]

FIG.4a

[Fig. 4b]

FIG.4b

## RÉFÉRENCES CITÉES DANS LA DESCRIPTION

**Documents brevets cités dans la description**

- EP 2940991 B1
- US 2010237245 A1
- EP 3594643 A1